# EUROPÄISCHE PATENTSCHRIFT

(11) **EP 3 260 966 B1**
(45) Veröffentlichungstag und Bekanntmachung des Hinweises auf die Patenterteilung: **31.03.2021**
(21) Anmeldenummer: 17174904.7
(22) Anmeldetag: 08.06.2017
(51) Int. Cl.: G06F 3/048, B60K 35/00, G06F 3/0481, B60K 37/06

(54) **BEDIENVORRICHTUNG EINES KRAFTFAHRZEUGS**
OPERATING DEVICE OF A MOTOR VEHICLE
DISPOSITIF DE COMMANDE D'UN VÉHICULE AUTOMOBILE

(30) Priorität: 23.06.2016 DE 102016007699
(43) Veröffentlichungstag der Anmeldung: 27.12.2017
(73) Patentinhaber: MAN Truck & Bus SE, 80995 München (DE)
(72) Erfinder: Mohra, Holger, 80805 München (DE); Arnold, Claus, 93161 Sinzing (DE); Zademach, Martin, 85055 Ingolstadt (DE); Güllich, Johannes, 85229 Markt Indersdorf (DE); Ochs, Thomas, 82178 Puchheim (DE)
(74) Vertreter: v. Bezold & Partner Patentanwälte - PartG mbB

(56) Entgegenhaltungen:
- EP-A1- 2 787 427
- EP-A2- 2 808 775
- DE-A1-102014 225 161
- US-A1- 2012 054 667

## Beschreibung

Die vorliegende Erfindung betrifft eine Technik zur Bedienung in einem Kraftfahrzeug. Insbesondere sind eine Bedienvorrichtung und ein mit der Bedienvorrichtung ausgestattetes Kraftfahrzeug beschrieben.

Zur Bedienung der wachsenden Funktionalität und Konnektivität eines Kraftfahrzeugs sind im Stand der Technik Benutzerschnittstellen mit komplexen Menüstrukturen bekannt, die beispielsweise an einem Fahrerarbeitsplatz angeordnet sind. Hierzu zählen auch sogenannte Infotainment-Systeme. Jedoch weisen herkömmliche Benutzerschnittstellen unübersichtliche Menüstrukturen bei wachsendem Inhalt auf.

Der Benutzer muss sich mit der komplexen Darstellungsformen und einer oft nicht intuitiven Bedienungsführung vertraut machen. Auch ist der Weg durch die Menüstruktur oft schwer nachvollziehbar und dadurch nicht zuverlässig reproduzierbar. Dabei ist es gerade bei Nutzfahrzeugen wichtig, dass bei einem Fahrerwechsel das Fahrzeug ohne zeitaufwendige Einarbeitung übernommen werden kann, auch um eine Fehlbedienung zu vermeiden.

Zudem müssen Bildschirmanzeigen in Kraftfahrzeugen, insbesondere während der Fahrt, klar und übersichtlich sein. Ein herkömmlicher Einsatz von Animationen in der Bedienungsführung, welche die Komplexität zu kaschieren versuchen, beschleunigen nicht den Bedienungsablauf und reduziert nicht die Komplexität der Bildschirmanzeige.

Das Dokument DE 10 2014 225 161 A1 beschreibt ein Bediensystem unter Verwendung eines Touchpads in einem Fahrzeug. Das Touchpad vermag eine Finger-Tipp-Gesten-Eingabe aufzunehmen und ein Gestiksignal zu erzeugen. In Reaktion auf das Gestiksignal wird eine Bewegung eines Auswahlfeldes oder von Objekten auf einem Informationsbildschirm einer Anzeigeeinheit angezeigt. Die Anzeigeeinheit gibt den Informationsbildschirm aus, auf dem das Auswahlfeld auf einem bestimmten Objekt angezeigt wird.

Das Dokument EP 2 787 427 A1 beschreibt ein Verfahren zur Handhabung von Informationen in einem Fahrzeug. Registerkarten mit Daten werden durch Drücken oder Ziehen an einer Seite angezeigt und eingefahren. Die Handhabung ermöglicht, dass die Registerkarten stapelweise überlappen und eingefahren werden, wobei auch die Anzahl der gestapelten Registerkarten angezeigt wird. Das Dokument EP 2 808 775 A2 beschreibt eine Steuerung für ein Informationswiedergabesystem eines Fahrzeugs. Eine Anzeigevorrichtung gibt einen ersten Inhalt der Steuerung auf einer Anzeigefläche wider. In Reaktion auf eine an einem vorbestimmten Rand der Anzeigefläche beginnende und sich von dem Rand weg erstreckende Bewegung des Benutzers wird eine zusätzliche Widergabe eines zweiten Inhalts in der Anzeigefläche bewirkt, die an den vorbestimmten Rand angrenzt.

Das Dokument US 2012/0054667 A1 beschreibt ein graphisches Benutzerschnittstellensystem mit einer Anzeige zum Anzeigen einer Vielzahl von Fenstern. Gleichzeitig werden eine Vielzahl von Fensteraktionseingaben empfangen. Jede Fensteraktionseingabe ist einem entsprechenden Fenster zugeordnet. Jedes Fenster enthält einen Rahmenabschnitt und einen Inhaltsabschnitt. Jeder Inhaltsabschnitt enthält ein Objekt mit einer vorbestimmten Funktion, die durch eine Funktionseingabe aktivierbar ist. Die Steuerung passt jedes Fenster entsprechend einer Fenstereinstellungseingabe an. Die Fenstereinstellungseingabe unterscheidet sich von der Funktionseingabe.

Somit ist es eine Aufgabe der vorliegenden Erfindung, eine Fahrzeugbedienung bereitzustellen, bei der ohne Informationsverlust eine übersichtliche Bedienung ermöglicht ist. Eine alternative oder zusätzliche Aufgabe ist die Bedienung des Fahrzeugs zu ermöglichen, ohne dass eine für die Bedienung spezifische Einarbeitung erforderlich ist.

Diese Aufgabe oder Aufgaben werden durch eine Bedienvorrichtung und ein mit der Bedienvorrichtung ausgestattetes Kraftfahrzeug mit den Merkmalen der unabhängigen Ansprüche gelöst. Vorteilhafte Ausführungen und Anwendungen sind Gegenstand der abhängigen Ansprüche und werden im Folgenden unter teilweiser Bezugnahme auf die Figuren näher erläutert.

Gemäß einem Aspekt ist eine Vorrichtung zur Bedienung eines Kraftfahrzeugs bereitgestellt. Die Bedienvorrichtung ist im Fahrerbereich des Kraftfahrzeugs einsetzbar. Die Bedienvorrichtung umfasst einen Bildschirm, der dazu ausgebildet ist, eine erste Information und in einer Informationsfläche eine von der ersten Information abhängige zweite Information anzuzeigen; eine Eingabeeinheit, die dazu ausgebildet ist, eine Vielzahl an Bewegungsrichtungen zu bestimmen; und eine mit dem Bildschirm und der Eingabeeinheit verbundene Steuerung, die dazu ausgebildet ist, in einer Schließstellung der Informationsfläche die erste Information und einen Teil der Informationsfläche ohne die zweite Information am Bildschirm anzuzeigen und in einer Offenstellung der Informationsfläche zumindest die Informationsfläche mit der zweiten Information am Bildschirm anzuzeigen, wobei ein Übergang von der Schließstellung in die Offenstellung durch Eingabe einer Bewegungsrichtung der Bewegungsrichtungen bewirkt wird, und ein Übergang von der Offenstellung in die Schließstellung durch Eingabe derselben Bewegungsrichtung bewirkt wird.

Indem die Eingaben derselben Bewegungsrichtung die Offenstellung und die Schließstellung jeweils bewirken, können Ausführungsbeispiele durch eine schwingende (beispielsweise eine am Bildschirmrand abprallende) Bewegung der Informationsfläche dem Benutzer einen intuitiven Zugriff auf die zweite Information ermöglichen. Dadurch ist die zusätzliche zweite Information jederzeit griffbereit und entfernbar, ohne dass die Bildschirmanzeige, insbesondere während der Fahrt, unübersichtlich ist. Die Optionalität der zweiten Information kann genutzt wird, diese auszublenden, und gleichzeitig durch eine eindeutige Eingabe jederzeit verfügbar zu halten. Durch die direkte Relation zwischen der Eingabebewegung eines Bedienelements und der Bildschirmanzeige ist kein zeitintensiver Lernaufwand für die Nutzung der Bedienvorrichtung erforderlich.

Das Kraftfahrzeug kann ein Personenkraftwagen oder ein Nutzfahrzeug, insbesondere ein Bus oder ein Lastkraftwagen, sein. Beispielsweise können Infotainment-Systeme in Fahrzeugen eine Vielzahl an Informationen vorhalten, die dem Fahrer in einer übersichtlichen Form präsentiert werden muss, insbesondere ohne ihn dabei von der Fahrt abzulenken. Ausführungsbeispiele können den Fahrer unterstützen durch eine strukturierte Bildschirmanzeige sowohl in der Schließstellung als auch in der Offenstellung, indem jeweils entweder die erste Information oder die zweite Information angezeigt wird.

Beispielsweise werden dem Benutzer in der Schließstellung wesentliche oder häufig abgefragte Fahrzeugdaten oder Streckeninformationen als erste Information angezeigt. Informationen, die für den aktuellen Zustand oder die aktuelle Nutzung des Kraftfahrzeugs nicht wesentlich sind oder selten abgefragt werden, können als die zweite Information zur Reduktion der Komplexität ausgeblendet sein.

Auf der Informationsfläche können in der Offenstellung z. B. Texte, Bilder und/oder Grafiken angezeigt werden. Insbesondere können Verweise oder Auswahlpunkte zu weitergehenden Ebenen einer hierarchischen Bedienungsführung angezeigt werden.

Die Vielzahl an Bewegungsrichtungen kann jeweils in Richtung eines Rands oder einer Ecke des Bildschirms gerichtet sein.

Die Informationsfläche wird in der Schließstellung zumindest durch einen Balken am Bildschirm repräsentiert. Die eingegebene Bewegungsrichtung entspricht einer Rand- oder Eck-Position des Balkens in der Schließstellung.

Der Balken weist in der Schließstellung einen Abstand zum Bildschirmrand auf. Hierbei kann der Bildschirmrand ein Grenzbereich sein, auf welchem die erste Information, die zweite Information und/oder die Informationsfläche nicht mehr anzeigbar ist.

Die Steuerung ist dazu ausgebildet, beim Ubergang von der Schließstellung in die Offenstellung den Balken und/oder die (beispielsweise partiell angezeigte) Informationsfläche um eine Position der Schließstellung unter temporärer Verkleinerung des Abstands zum Bildschirmrand schwingend zu bewegen. Die Schwingbewegung kann eine Bewegungsumkehr umfassen. Die Schwingbewegung kann eine halbe Schwingungsperiode umfassen.

Ferner ist die Steuerung dazu ausgebildet, beim Ubergang von der Schließstellung in die Offenstellung den Balken und/oder die Informationsfläche nach der Schwingbewegung entgegen der eingegebenen Bewegungsrichtung zur Mitte des Bildschirms zu bewegen.

Die Steuerung kann dazu ausgebildet sein, beim Übergang von der Offenstellung in die Schließstellung den Balken und/oder die Informationsfläche in Richtung der eingegeben Bewegungsrichtung zu bewegen. Ferner kann die Steuerung dazu ausgebildet sein, beim Übergang von der Offenstellung in die Schließstellung den Balken und/oder die (beispielsweise partiell angezeigte) Informationsfläche nach Durchlaufen der Position der Schließstellung schwingend zu bewegen, beispielsweise nach einer Verzögerungsphase entgegen der eingegebenen Bewegungsrichtung zum Erreichen der Position der Schließstellung zu bewegen. Der Balken kann über seine Position in der Schließstellung hinaus schwingen, unter temporärer Verkleinerung des Abstands zum Bildschirmrand, und nach Umkehr seiner Bewegungsrichtung seine Position für die Schließstellung einnehmen.

Der Balken kann (in der Schließstellung, in der Offenstellung und/oder währen den Übergängen) an einer Kante der Informationsfläche angeordnet sein oder durch diese realisiert sein.

Die Bedieneinheit umfasst mindestens ein mechanisch bewegliches Bedienelement.

Die Bedieneinheit umfasst ein Bedienelement, das in jede der Vielzahl an Bewegungsrichtungen manuell beweglich ist. In einem nicht beanspruchten Beispiel können Fingerbewegungen auf berührungsempfindlichen Flächen oder im Raum erfasst werden.

Die Informationsfläche kann in der Schließstellung nicht oder unvollständig am Bildschirm angezeigt sein. Alternativ oder ergänzend kann die Informationsfläche in der Offenstellung vollständig innerhalb des Bildschirms angezeigt sein.

Die Steuerung kann ferner dazu ausgebildet sein, in der Offenstellung die in der Informationsfläche angezeigte zweite Information in Reaktion auf weitere Eingaben an der Eingabeeinheit zu verändern. Die weiteren Eingaben können von den Eingaben der Bewegungsrichtung verschieden sein.

Gemäß einem weiteren Aspekt ist ein Kraftfahrzeug, insbesondere ein Nutzfahrzeug, bereitgestellt. Die Vorrichtung kann im Fahrerbereich des Kraftfahrzeugs, beispielsweise am Armaturenbrett des Kraftfahrzeugs, und/oder in einem Fahrerhaus des Nutzfahrzeugs angeordnet sein.

Weitere Merkmale und Vorteile der Erfindung werden im Folgenden unter Bezugnahme auf die beigefügten Zeichnungen beschrieben. Es zeigen:
- Figur 1: schematisch einen Fahrerbereich mit einem Ausführungsbeispiel einer Vorrichtung zur Bedienung eines Kraftfahrzeugs;
- Figur 2: eine schematische Bildschirmanzeige in einer Schließstellung einer Informationsfläche in einer ersten Implementierung der Vorrichtung der Figur 1;
- Figur 3: eine schematische Bildschirmanzeige eines Übergangs von der Schließstellung der Figur 2 in eine Offenstellung der Informationsfläche;
- Figur 4: eine schematische Bildschirmanzeige der Offenstellung der Informationsfläche;
- Figur 5: eine schematische Bildschirmanzeige eines Übergangs von der Offenstellung der Figur 4 in die Schließstellung der Figur 2;
- Figur 6: eine schematische Bildschirmanzeige der Schließstellung der Informationsfläche in einer zweiten Implementierung der Vorrichtung der Figur 1;
- Figur 7: eine schematische Bildschirmanzeige des Übergangs von der Schließstellung in die Offenstellung der Informationsfläche in einer dritten Implementierung der Vorrichtung der Figur 1; und
- Figur 8: eine schematische Bildschirmanzeige der Schließstellung der Informationsfläche in einer vierten Implementierung der Vorrichtung der Figur 1.

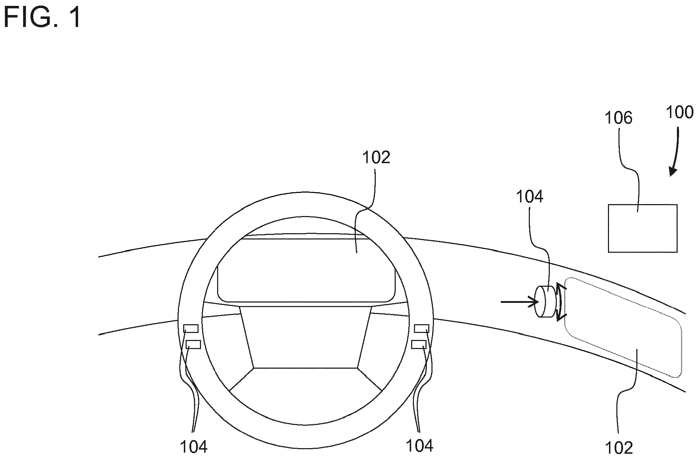

Figur 1 zeigt schematisch ein erstes Ausführungsbeispiel einer allgemein mit Bezugszeichen 100 bezeichneten Vorrichtung zur Bedienung eines Kraftfahrzeugs. Die Vorrichtung 100 umfasst mindestens einen Bildschirm 102 und mindestens eine Eingabeeinheit 104. Die Vorrichtung 100 kann in PKWs oder Nutzfahrzeugen eingesetzt sein.

Beispielsweise ist der Bildschirm 102 ein Sekundärdisplay und die Eingabeeinheit 104 umfasst einen Steller für eine Dreh- und Drückbewegung in räumlicher Zuordnung zum Sekundärdisplay. Das Sekundärdisplay und/oder der Dreh-Drück-Steller können an der Mittelkonsole angeordnet sein.

Alternativ oder ergänzend ist der Bildschirm 102 durch ein freiprogrammierbares Kombinationsinstrument realisiert. Insbesondere in letzterem Fall kann die Eingabeeinheit 104 Steuertasten (beispielsweise Pfeiltasten) an einem Multifunktionslenkrad umfassen.

Eine weitere oder zusätzliche Umsetzung des Bildschirms 102 umfasst ein sogenanntes Head-Up-Display (HUD). Insbesondere in letzterem Fall kann die Eingabeeinheit 104 dazu ausgebildet sein, Gestensteuerungen im Raum zu erfassen. Beispielsweise umfasst die Eingabeeinheit 104 einen Mikrowellensender, beispielsweise für elektromagnetische Strahlung mit einer Frequenz zwischen 2 GHz bis 300 GHz (beispielsweise 60 GHz) und einen Empfänger zum Empfangen eines Echosignals der Mikrowellen, die von der Oberfläche einzelner Finger oder einer Handfläche reflektieren.

Ferner kann in jedem Beispiel am Bildschirm 102 eine berührungsempfindliche Oberfläche als Eingabeeinheit 104 oder als zusätzliche Eingabemöglichkeit angeordnet sein.

Der Bildschirm 102 und die Eingabeeinheit 104 stehen mit einer Steuerung 106 in Signalverbindung. Die Steuerung 106 kann dazu ausgebildet sein, Grafiksignale zu erzeugen und an den Bildschirm 102 auszugeben sowie Eingabesignale von der Eingabeeinheit 104 zu erhalten, wobei die erzeugten Grafiksignale von den Eingabesignalen abhängen.

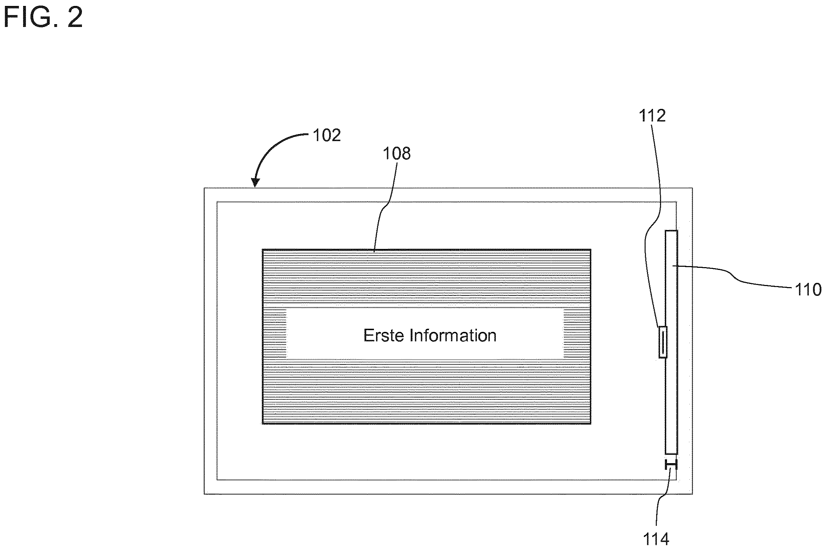

Figur 2 zeigt schematisch eine Bildschirmanzeige gemäß einer ersten Implementierung. Die in Figur 2 gezeigte Bildschirmanzeige umfasst eine erste Information 108, beispielsweise innerhalb eines berandeten Bereichs des Bildschirms 102, und eine Schließstellung einer Informationsfläche 110.

Die erste Information 108 kann einem aktuell angezeigten Inhalt eines Infotainment-System des Kraftfahrzeugs, einer Streckenführung des Kraftfahrzeugs oder einer externen Ziel- oder Auftragsplanung entsprechen.

Die Informationsfläche 110 ist in der Schließstellung nur teilweise angezeigt. Die Informationsfläche ist an einem Rand des Bildschirms 102 überwiegend (beispielsweise zu über 90% der Fläche) außerhalb des Bildschirms 102 angeordnet. Beispielsweise ist die Informationsfläche 110 in einen Rahmen eingefasst und in der Schließstellung ist nur eine Seitenlänge des Rahmens vollständig angezeigt. Die Informationsfläche kann auch als Informationsfenster mit Steuerelementen in mindestens einer Ecke des Fensters ausgebildet sein.

Keine Information innerhalb der Informationsfläche 110 wird in der Schließstellung am Bildschirm 102 angezeigt.

Zumindest in der Schließstellung ist ein Balken 112 sichtbar, der die Informationsfläche repräsentiert oder ergänzt. Der Balken 112 ist in einem Abstand 114 gegenüber dem nächstliegenden Rand oder Eck des Bildschirms 102 angeordnet. Der Abstand 114 wird auch als Abstand 114 der Schließstellung bezeichnet. Der Balken 112 kann allein durch die angezeigte Seitenlänge, eine Verbreiterung eines Abschnitts der Seitenlänge oder, wie in Figur 2 gezeigt, durch die Anzeige einer Griffleiste auf der Seitenlänge realisiert sein.

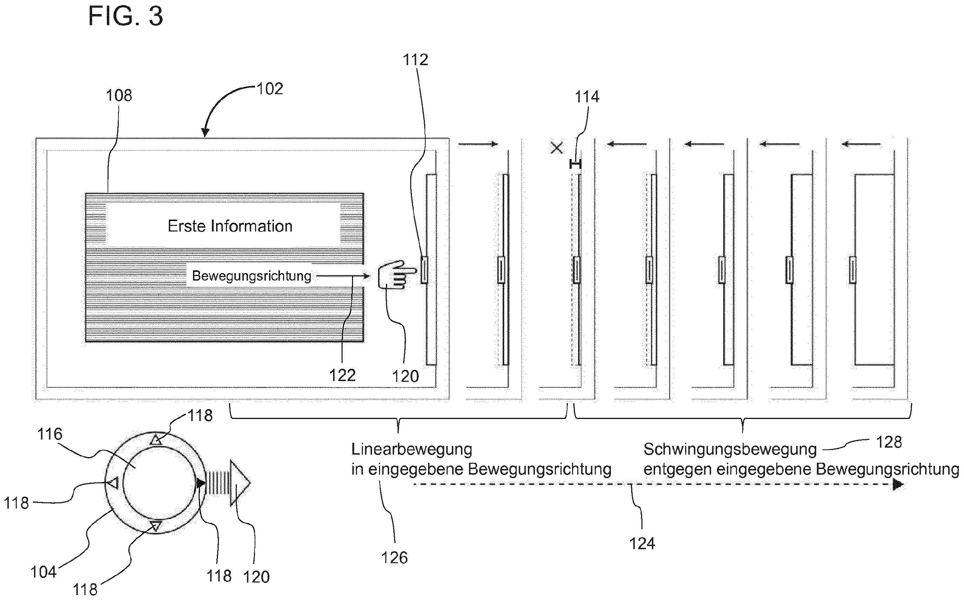

Figur 3 zeigt schematisch die Bildschirmanzeige bei einem Übergang von der in Figur 2 gezeigten Schließstellung in eine Offenstellung der Informationsfläche. Der Übergang wird durch eine Eingabe an der Eingabeeinheit 104 bewirkt.

Die Eingabeeinheit 104 umfasst ein physisches Bedienelement 116, das in eine Vielzahl an Richtungen 118 beweglich ist. Der Übergang wird ausgelöst durch eine erste Eingabe 120 einer Bewegungsrichtung 122, die der seitlichen Lage der Informationsfläche 110 und/oder dessen Balken 112 bezüglich des Bildschirms 102 entspricht. Im in Figur 3 gezeigten Beispiel ist der Balken 112 in der Schließstellung am rechten Rand des Bildschirms 102 angeordnet, und die eingegebene Bewegungsrichtung 122 ist rechts. Beispielsweise wird das Bedienelement 116 in Richtung der Informationsfläche 110 gezogen und losgelassen.

Bei einer Eingabeeinheit 104 mit einer berührungsempfindlichen Fläche kann die Eingabe 120 ein Gleiten eines Fingers in die Bewegungsrichtung 122 umfassen, beispielsweise bei einem berührungsempfindlichen Bildschirm 102 an der Stelle des Balkens 112. Erfasst die Eingabeeinheit 104 eine räumliche Geste, kann die Eingabe 120 eine Finger- oder Handbewegung in die Bewegungsrichtung 122 umfassen.

Eine Zeitachse 124 des Übergangs mit Ausschnitten der entsprechenden Bildschirmanzeigen ist von links nach rechts in Figur 3 schematisch gezeigt. Der Übergang von der Schließstellung in die Offenstellung der Informationsfläche 110 kann eine Linearbewegung 126 und eine Schwingbewegung 128 umfassen. In der Linearbewegung 126 folgt der Balken 112 (und der ggf. angezeigte Teil der Informationsfläche 110) der Eingabe 120 durch eine Translationsbewegung in Richtung der eingegebenen Bewegungsrichtung.

Wird ein Abstand des Balkens 112 zu dem (der Bewegungsrichtung 122 entsprechenden) Rand des Bildschirms 102 kleiner als der Abstand 114, wird die Bewegung durch eine Beschleunigung entgegen der Bewegungsrichtung 122 verzögert, umgekehrt (an der mit "x" gekennzeichneten Bildschirmanzeige) und entgegen der eingegebenen Bewegungsrichtung 122 fortgesetzt weg vom Rand des Bildschirms 102.

Die Bewegung des Balkens (und der ggf. teilweise angezeigten Informationsfläche 110) im Bereich des Abstands 114 wird hierin allgemein als Schwingbewegung 128 bezeichnet. Die Beschleunigung während der Schwingbewegung 128, beispielsweise solange der Abstand kleiner als der Abstand 114 ist, kann konstant sein (für eine im zeitlichen Verlauf parabelförmige Bewegung), kann proportional zum Abstand zum Rand sein (für eine im zeitlichen Verlauf harmonische Bewegung) oder kann überproportional anwachsen (beispielsweise gemäß einer zum Rand hin divergierenden funktionalen Abhängigkeit, um zu verhindern, dass der Balken 112 den Rand des Bildschirm 102 temporär verlässt oder um einen Anschlag am Rand des Bildschirms dynamisch anzuzeigen).

An die Schwingbewegung 128 schließt sich vorzugsweise eine Linearbewegung bei gleichbleibender Geschwindigkeit der Informationsfläche 110 an, bis die Informationsfläche 110 in einer Offenstellung vollständig innerhalb des Bildschirms 102 angezeigt wird.

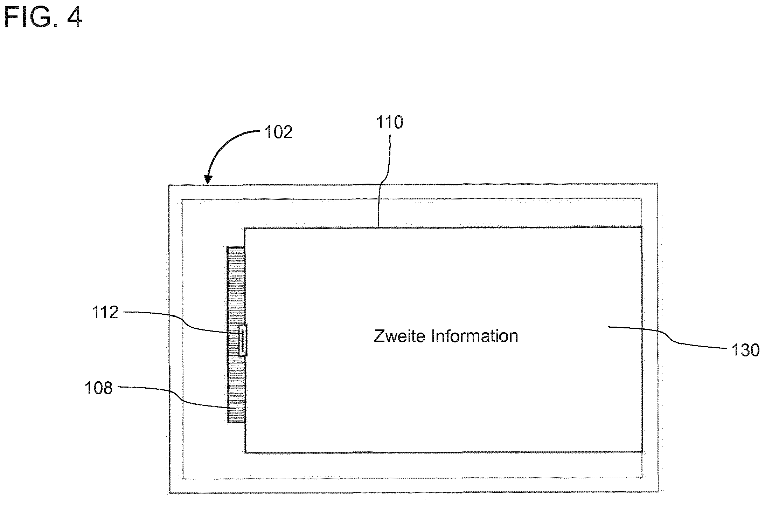

Figur 4 zeigt eine schematische Bildschirmanzeige der Offenstellung der Informationsfläche 110. Die Informationsfläche 110 enthält eine zweite Information 130. Die zweite Information 130 kann während der gesamten Bewegung der Informationsfläche 110 innerhalb der Informationsfläche 110, beispielsweise ortsfest relativ zur Informationsfläche 110, angezeigt werden. Die zweite Information 130 kann sich auf die erste Information 108 beziehen und diese ergänzen.

Die Informationsfläche 110 gibt tiefergehende zweite Informationen 130 frei, indem sich das Informationsfenster 110 solange über den Bildschirm 102 schiebt, bis die komplette Informationsfläche 110 freigegeben ist. Dabei kann die Informationsfläche 110 aktuell dargestellte Anzeigen der ersten Information 108 überdecken. Die erste Information 108 kann teilweise oder vollständig durch die Informationsfläche 110 in der Offenstellung überdeckt werden.

Beispielsweise umfasst die Vorrichtung 100 ein Infotainment-System im Fahrerhaus eines Nutzfahrzeugs. Die Vorrichtung 100 ermöglicht dem Fahrer, innerhalb des Navigationsfensters als die erste Information 108, auf unkomplizierte Weise die Informationsfläche 110 als ein weiteres Informationsfenster abzurufen. Auch in anderen Ebenen der Bedienungsführung der Steuerung 106 wird diese Informationsfläche 110 oder eine kontextabhängige Informationsfläche 110 dazu eingesetzt, um dem Fahrer auf unkomplizierte Weise Zusatzinformationen anzubieten.

Alternativ oder ergänzend kann die Steuerung 106 dazu ausgebildet sein, eine Interaktion mit dem Benutzer innerhalb der Informationsfläche 110 auszuführen. Beispielsweise umfasst die Informationsfläche 110 tiefergehende Informationen (beispielsweise Umgebungsinformationen) und/oder Einstellungsmöglichkeiten (beispielsweise Zielorte). Die Steuerung 106 kann die Benutzerinteraktion im Rahmen der Informationsfläche 110 von der Bedienung der Übergänge der Informationsfläche 110 unterscheiden, beispielsweise durch disjunkte Eingabesignale. Beispielsweise sind Dreh- und Drück-Eingaben am Bedienelement 116 ausschließlich der Benutzerinteraktion innerhalb der Informationsfläche 110 zugeordnet, und Eingaben 120 und 121 einer Bewegungsrichtung 118 sind ausschließlich der Bedienung des Übergangs der Informationsfläche 110 zugeordnet.

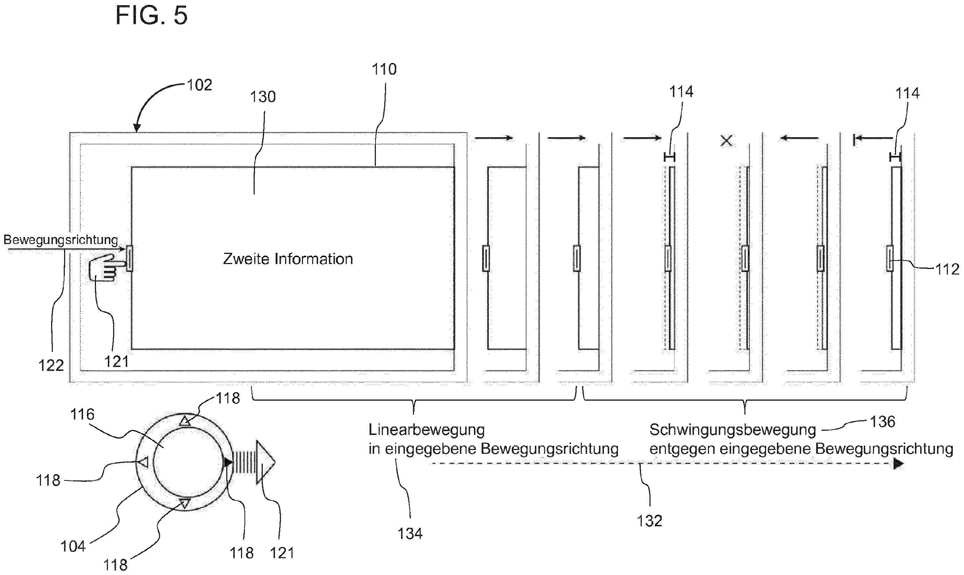

Figur 5 zeigt schematisch einen Übergang von der Offenstellung der Informationsfläche 110 in die Schließstellung. Der Übergang in der Offenstellung wird ausgelöst durch eine zweite Eingabe 121 derselben Bewegungsrichtung 122, die auch den von der Schließstellung ausgehenden Übergang bewirkt. Die zweite Eingabe 121 kann dasselbe Bedienelement 116 oder eine andere Eingabemöglichkeit benutzen. Beispielsweise kann die erste Eingabe 120 das Bedienelement 116 und die zweite Eingabe eine von der Eingabeeinheit 104 erfasste Geste nutzen, die jeweils derselben Bewegungsrichtung entsprechen. Im Fall der zweiten Eingabe 121 am berührungsempfindlichen Bildschirm 102 setzt diese am Balken 112 an.

Figur 5 zeigt eine Zeitachse 132 des Übergangs von der Offenstellung in die Schließstellung der Informationsfläche 110. In einer ersten Phase 134 erfolgt eine Linearbewegung des Informationsfensters 110 in die eingegebene Bewegungsrichtung 122. Eine zweite Phase 136 umfasst eine Schwingbewegung um den Abstand des Balkens 112 (und/oder der der Bewegungsrichtung entgegengesetzten Kante der Informationsfläche 110) zum Rand des Bildschirms. Die Schwingbewegung umfasst beispielsweise die Phase 136, während der Abstand kleiner als der Abstand 114 der Schließstellung ist.

Während der Schwingbewegung 136 wird die Bewegung des Balkens 112 verzögert, kehrt sich um (zu der mit "x" bezeichneten Zeit) und prallt entgegen der eingegebenen Bewegungsrichtung 122 vom Rand des Bildschirms 102 ab, bis zum Erreichen des Abstands 114 der Schließstellung. Die Bewegungsumkehr am Bildschirmrand beim Übergang in die Schließstellung folgt vorzugsweise derselben vom Abstand abhängigen Beschleunigung wie im Fall des Übergangs von der Schließstellung in die Offenstellung. Dadurch kann die Dynamik der Informationsfläche 110 einer reproduzierbaren und konsistenten Arbeitsumgebung entsprechen.

Die aus dem in Figur 5 gezeigten Übergang resultierende Schließstellung gibt die in der Offenstellung verdeckte erste Information 108 vollständig frei, beispielsweise wie in Figur 2 gezeigt. Die Anzeige der ersten Information 108 kann sich, beispielsweise falls zeitabhängige Daten umfasst sind, beim Übergang in die Schließstellung aktualisieren.

Die Steuerung 106 kann dazu ausgebildet sein, ein Bedienverfahren gemäß den Figuren 2 bis 5 zur platzsparenden Informationsdarstellung in Bildschirmen von Fahrzeugen auszuführen. Das Bedienverfahren ermöglicht es dem Benutzer, zweite Informationen 130 innerhalb einer bestehenden Ansicht der ersten Information 108 auf dem Bildschirm 102 abzurufen.

Die Technik ermöglicht einen digitalen Bedienvorgang mit einer realitätsentsprechenden oder realitätsnahen Bewegung des Öffnungs- und Schließvorgangs mittels Bildschirm 102 und

Eingabeeinheit 104. Der Bedienvorgang wird durch ein den Bewegungsrichtungen 118 entsprechendes Bedienelement 116 gesteuert, oder kann in einem nicht beanspruchten Beispiel per Touchscreen oder durch Erfassung räumlicher Gesten gesteuert sein. Indem die Eingaben 120 und 121 des Benutzers (beispielsweise des Fahrers) in die Richtung des Balkens 112 gerichtet ist und der Balken 112 in Reaktion auf die Eingabe eine federnde Bewegung 128 bzw. 136 ausführt, die beispielsweise der numerisch simulierten Bewegung beim Öffnen bzw. Schließen einer Sensorschublade entspricht, ist ein realitätsentsprechender Bedienvorgang erreicht.

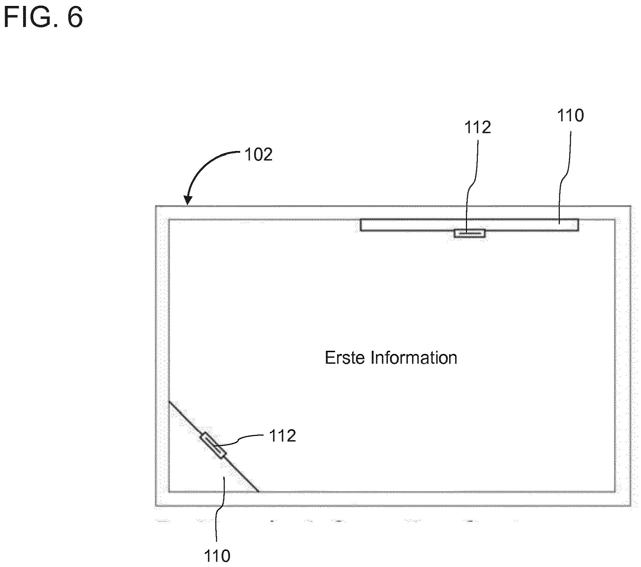

Figur 6 zeigt schematisch eine Bildschirmanzeige der Schließstellung in einer nicht beanspruchten zweiten Implementierung der Vorrichtung 100. Die partiell angezeigte Informationsfläche 110 und/oder der Balken 112 können an jeder Seite des Bildschirms 102 angeordnet sein, auch außerhalb einer Seitenmitte. Beispielsweise kann die Informationsfläche 110 ihre Position senkrecht zur eingegebenen Bewegungsrichtung 122 beim Übergang in die Schließstellung und/oder beim Übergang in die Offenstellung beibehalten.

Alternativ oder ergänzend können in der Schließstellung die Informationsfläche 110 und/oder der Balken 112 in einer Ecke des Bildschirms 102 angeordnet sein. Dazu kann die eingegebene Bewegungsrichtung 122 die entsprechende Ecke vorgeben, beispielsweise indem das Bedienelement 116 durch zeitlich überlappende Betätigung der Richtungen "unten" und "links" in eine entsprechende Ecke bewegt wird.

In allen Implementierungen sind mehrere verschieden Informationsflächen 110 realisierbar, die jeweils eigene zweite Informationen 130 umfassen können. Die Informationsflächen 110 können unabhängig voneinander bewegt werden. Beispielsweise werden die Informationsflächen anhand ihrer Randlage bei der ersten Eingabe 120 und/oder der zweiten Eingabe 121 eindeutig über die eingegebene Bewegungsrichtung 122 bestimmt.

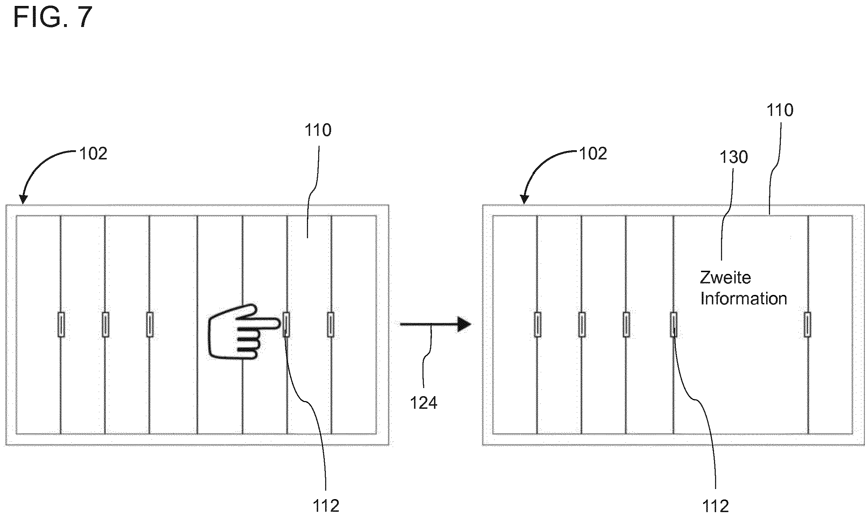

Figur 7 zeigt schematisch den Ubergang von der Schließstellung in die Offenstellung in einer nicht beanspruchten dritten Implementierung der Vorrichtung 100. In der Schließstellung kann der Balken 112 innerhalb des Bildschirms 102 (beispielsweise an einem Rand eines Hauptfensters der ersten Information 108) angeordnet sein. Die zugehörige Informationsfläche 110 öffnet sich innerhalb des Bildschirms 102 durch Richtungsumkehr des Balkens 112 aufgrund der Schwingbewegung 128.

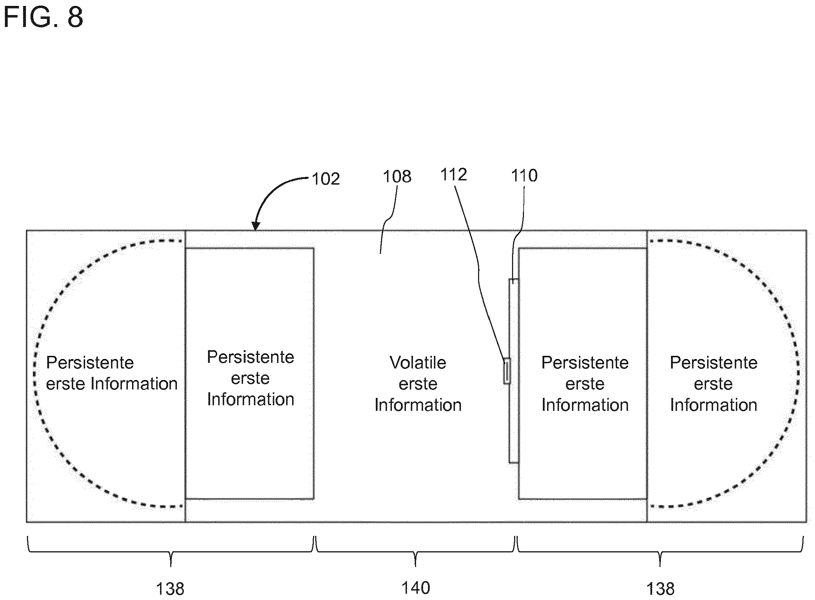

Figur 8 zeigt schematisch die Schließstellung in einer nicht beanspruchten vierten Implementierung der Vorrichtung 100. Der Bildschirm 102 ist durch ein freiprogrammierbares Kombinationsinstrument (FPK) realisiert. Der Bildschirm 102 umfasst persistente Bereiche 138, die von den durch die Übergänge verursachten Veränderungen ausgenommen sind, und einen veränderbaren Bereich 140, in dem die Informationsfläche 110 durch Überdeckung der ersten Information 108 seine Offenstellung einnimmt.

Wie anhand vorstehender Ausführungsbeispiele verdeutlicht, kann die Bewegung des Bedienelements einer intuitiv zu erlernenden Bewegung folgen, beispielsweise dem Öffnen einer Schublade mit Drucksensortechnik. Die Übergänge zwischen Offen- und Schließstellung können so vertrauten Abläufen eines Öffnungsmechanismus entsprechen, beispielsweise für grifflosen Schubladen oder Schranktüren, die durch einen leichten Druck gegen die Front geöffnet und geschlossen werden.

Dadurch dass der Benutzer den Übergang auslöst durch eine Bedienungsbewegung in Richtung der gewünschten zweiten Information, und nicht weg von der Informationsfläche (wie bei einer ziehenden Bewegungen), ist ein direkter Zugriff ohne Lernaufwand ermöglicht. Durch die Öffnungs- und Schließtechnik der Informationsflächen erfolgt eine platzsparende Darstellung der Fahrzeuginformationen in der begrenzten Anzeigefläche des Bildschirms.

Obwohl die Erfindung in Bezug auf exemplarische Ausführungsbeispiele beschrieben worden ist, ist es für einen Fachmann ersichtlich, dass verschiedene Änderungen vorgenommen werden können. Ferner können viele Modifikationen vorgenommen werden, um eine bestimmte Situation oder ein bestimmtes Material an die Lehre der Erfindung anzupassen. Folglich ist die Erfindung nicht auf die offenbarten Ausführungsbeispiele beschränkt, sondern umfasst alle Ausführungsbeispiele, die in den Bereich der beigefügten Patentansprüche fallen.

### Bezugszeichenliste

- 100: Vorrichtung zur Bedienung eines Kraftfahrzeugs
- 102: Bildschirm
- 104: Eingabeeinheit
- 106: Steuerung
- 108: Erste Information
- 110: Informationsfläche
- 112: Balken
- 114: Abstand des Balkens
- 116: Bedienelement der Eingabeeinheit
- 118: Vielzahl an Richtungen
- 120: Erste Eingabe an der Eingabeeinheit
- 121: Zweite Eingabe an der Eingabeeinheit
- 122: Eingegebene Bewegungsrichtung
- 124: Erste Zeitachse
- 126: Linearbewegung auf erste Eingabe
- 128: Schwingbewegung auf erste Eingabe
- 130: Zweite Information
- 132: Zweite Zeitachse
- 134: Linearbewegung auf zweite Eingabe
- 136: Schwingbewegung auf zweite Eingabe
- 138: Persistenter Bereich des Bildschirms
- 140: Veränderlicher Bereich des Bildschirms

## Patentansprüche

1. Bedienvorrichtung (100) im Fahrerbereich eines Kraftfahrzeugs, umfassend:
einen Bildschirm (102), der dazu ausgebildet ist, eine erste Information (108) und in einer Informationsfläche (110) eine von der ersten Information (108) abhängige zweite Information (130) anzuzeigen;
eine Eingabeeinheit (104), die dazu ausgebildet ist, eine Vielzahl an Bewegungsrichtungen (118) zu bestimmen, wobei die Bedieneinheit (104) ein Bedienelement (116) umfasst, das in jede der Vielzahl an Bewegungsrichtungen (118) manuell beweglich ist; und
eine mit dem Bildschirm (102) und der Eingabeeinheit (104) verbundene Steuerung (106), die dazu ausgebildet ist, in einer Schließstellung der Informationsfläche (110) die erste Information (108) und einen Teil der Informationsfläche (110) ohne die zweite Information (130) am Bildschirm (102) anzuzeigen, wobei die Informationsfläche (110) in der Schließstellung zumindest durch einen Balken (112) am Bildschirm (102) repräsentiert ist und der Balken (112) in der Schließstellung einen Abstand (114) zum Bildschirmrand aufweist, und in einer Offenstellung der Informationsfläche (110) zumindest die Informationsfläche (110) mit der zweiten Information (130) am Bildschirm (102) anzuzeigen, wobei ein Übergang von der Schließstellung in die Offenstellung durch Eingabe (120) einer Bewegungsrichtung (122) der Bewegungsrichtungen (118) bewirkt wird, wobei die eingegebene Bewegungsrichtung (122) einer Rand- oder Eck-Position des Balkens (112) in der Schließstellung entspricht, wobei die Steuerung (106) dazu ausgebildet ist, beim Übergang von der Schließstellung in die Offenstellung zumindest den Balken (112) um seine Position der Schließstellung unter temporärer Verkleinerung des Abstands zum Bildschirmrand schwingend zu bewegen und den Balken (112) und die Informationsfläche (110) nach der Schwingbewegung (128) entgegen der eingegebenen Bewegungsrichtung (122) zur Mitte des Bildschirms (102) zu bewegen, und ein Übergang von der Offenstellung in die Schließstellung durch Eingabe (121) derselben Bewegungsrichtung (122) bewirkt wird.

2. Bedienvorrichtung nach Anspruch 1, wobei die Vielzahl an Bewegungsrichtungen (118) jeweils in Richtung eines Rands oder einer Ecke des Bildschirms (102) gerichtet sind.

3. Bedienvorrichtung nach einem der vorherigen Ansprüche, wobei die Steuerung dazu ausgebildet ist, beim Übergang von der Offenstellung in die Schließstellung den Balken (112) und/oder die Informationsfläche (110) in Richtung der eingegeben Bewegungsrichtung (122) zu bewegen.

4. Bedienvorrichtung nach Anspruch 3, wobei die Steuerung (106) dazu ausgebildet ist, beim Übergang von der Offenstellung in die Schließstellung den Balken (112) nach Durchlaufen seiner Position der Schließstellung schwingend zu bewegen entgegen der eingegebenen Bewegungsrichtung zum Erreichen der Position der Schließstellung.

5. Bedienvorrichtung nach einem der vorherigen Ansprüche, wobei der Balken (112) zumindest in der Schließstellung und/oder in der Offenstellung an einer Kante der Informationsfläche (110) angeordnet ist oder dieser entspricht.

6. Bedienvorrichtung nach einem der Ansprüche 1 bis 5, wobei die Informationsfläche (110) in der Schließstellung nicht oder unvollständig am Bildschirm (102) angezeigt ist.

7. Bedienvorrichtung nach einem der Ansprüche 1 bis 6, wobei die Informationsfläche (110) in der Offenstellung vollständig innerhalb des Bildschirms (102) angezeigt ist.

8. Bedienvorrichtung nach einem der Ansprüche 1 bis 7, wobei die Steuerung (106) ferner dazu ausgebildet ist, in der Offenstellung die in der Informationsfläche (110) angezeigte zweite Information (130) in Reaktion auf weitere Eingaben an der Eingabeeinheit (104) zu verändern, wobei die weiteren Eingaben von den Eingaben (120, 121) der Bewegungsrichtung (122) verschieden sind.

9. Kraftfahrzeug, insbesondere Nutzfahrzeug, dessen Fahrerbereich eine Vorrichtung (100) nach einem der Ansprüche 1 bis 8 umfasst.

## Claims

1. An operator control device (100) in the driver's area of a motor vehicle, comprising:
a screen (102) which is designed to display first information (108), and to display in an information area (110) second information (130) which is dependent on the first information (108);
an input unit (104) which is designed to determine a multiplicity of movement directions (118), wherein the operator control unit (104) comprises an operator control element (116) which can be moved manually in each of the multiplicity of movement directions (118); and
a controller (106) which is connected to the screen (102) and to the input unit (104) and is designed to display, in a closed position of the information area (110), the first information (108) and part of the information area (110) without the second information (130) on the screen (102), wherein in the closed position the information area (110) is represented at least by one bar (112) on the screen (102), and in the closed position the bar (112) is at a distance (114) from the edge of the screen, and in an open position of the information area (110) to display at least the information area (110) with the second information (130) on the screen (102), wherein a transition from the closed position into the open position is brought about by inputting (120) a movement direction (122) of the movement directions (118), wherein the movement direction (122) which has been input corresponds to an edge position or corner position of the bar (112) in the closed position, wherein the controller (106) is designed to move, at the transition from the closed position into the open position, at least the bar (112) in an oscillating manner about its position of the closed position with temporary reduction in the distance from the edge of the screen, and after the oscillating movement (128) to move the bar (112) and the information area (110) to the centre of the screen (102) counter to the movement direction (122) which has been input, and a transition from the open position into the closed position is brought about by inputting (121) the same movement direction (122) .

2. The operator control device according to Claim 1, wherein the multiplicity of movement directions (118) are each directed in the direction of an edge or a corner of the screen (102).

3. The operator control device according to either of the preceding claims, wherein the controller is designed to move, at the transition from the open position into the closed position, the bar (112) and/or the information area (110) in the direction of the movement direction (122) which has been input.

4. The operator control device according to Claim 3, wherein the controller (106) is designed to move, at the transition from the open position into the closed position, the bar (112) in an oscillating manner after its position of the closed position has been passed through, counter to the movement direction which has been input, in order to reach the position of the closed position.

5. The operator control device according to one of the preceding claims, wherein the bar (112) is arranged at least in the closed position and/or in the open position at an edge of the information area (110) or corresponds thereto.

6. The operator control device according to one of Claims 1 to 5, wherein in the closed position the information area (110) is not displayed, or is incompletely displayed, on the screen (102).

7. The operator control device according to one of Claims 1 to 6, wherein in the open position the information area (110) is displayed completely inside the screen (102).

8. The operator control device according to one of Claims 1 to 7, wherein the controller (106) is also designed to change, in the open position, the second information (130) displayed in the information area (110), in reaction to further inputs on the input unit (104), wherein the further inputs are different from the inputs (120, 121) of the movement direction (122) .

9. A motor vehicle, in particular utility vehicle, whose driver's area comprises a device (100) according to one of Claims 1 to 8.

## Revendications

1. Dispositif de commande (100) au poste de conducteur d'un véhicule automobile, comprenant :
un écran (102) qui est réalisé pour afficher une première information (108) et pour afficher sur une surface d'information (110) une deuxième information (130) dépendant de la première information ;
une unité d'entrée (104) qui est réalisée pour déterminer une pluralité de directions de mouvement (118), l'unité de commande (104) comprenant un élément de commande (116) qui peut être déplacé manuellement dans chacune de la pluralité de directions de mouvement ; et
un contrôleur (106) relié à l'écran (102) et à l'unité d'entrée (104) et qui est réalisé, en configuration fermée de la surface d'information (110), pour afficher à l'écran (102) la première information (108) et une partie de la surface d'information (110) sans la deuxième information (130), dans lequel, en configuration fermée, la surface d'information (110) est représentée à l'écran (102) au moins par une barre (112), et en configuration fermée, la barre (112) présente une distance (114) par rapport au bord d'écran, et en configuration ouverte de la surface d'information (110), pour afficher à l'écran (102) au moins la surface d'information (110) avec la deuxième information (130), dans lequel une transition de la configuration fermée à la configuration ouverte est provoquée par l'entrée (120) d'une direction de mouvement (122) parmi les directions de mouvement (118), la direction de mouvement (122) entrée correspondant à une position de bord ou de coin de la barre (112) en configuration fermée, le contrôleur (106) étant réalisé, à la transition de la configuration fermée à la configuration ouverte, pour déplacer par pivotement au moins la barre (112) autour de sa position de la configuration fermée en réduisant temporairement la distance par rapport au bord d'écran, et pour déplacer la barre (112) et la surface d'information (110) après le mouvement pivotant (128) à l'opposé de la direction de mouvement entrée (122) vers le centre de l'écran (102), et une transition de la configuration ouverte à la configuration fermée est provoquée par l'entrée (121) de la même direction de mouvement (122).

2. Dispositif de commande selon la revendication 1, dans lequel la pluralité de directions de mouvement (118) est orientée respectivement en direction d'un bord ou d'un coin de l'écran (102).

3. Dispositif de commande selon l'une quelconque des revendications précédentes, dans lequel le contrôleur est réalisé, à la transition de la configuration ouverte à la configuration fermée, pour déplacer la barre (112) et/ou la surface d'information (110) en direction de la direction de mouvement (122) entrée.

4. Dispositif de commande selon la revendication 3, dans lequel le contrôleur (106) est réalisé, à la transition de la configuration ouverte à la configuration fermée, pour déplacer par pivotement la barre (112) après le passage par sa position de la configuration fermée à l'opposé de la direction de mouvement entrée pour atteindre la position de la configuration fermée.

5. Dispositif de commande selon l'une quelconque des revendications précédentes, dans lequel, au moins en configuration fermée et/ou en configuration ouverte, la barre (112) est disposée sur un bord de la surface d'information (110) ou coïncide avec celui-ci.

6. Dispositif de commande selon l'une quelconque des revendications 1 à 5, dans lequel, en configuration fermée, la surface d'information (110) n'est pas ou pas complètement affichée à l'écran (102).

7. Dispositif de commande selon l'une quelconque des revendications 1 à 6, dans lequel, en configuration ouverte, la surface d'information (110) est affichée complètement à l'intérieur de l'écran (102).

8. Dispositif de commande selon l'une quelconque des revendications 1 à 7, dans lequel le contrôleur (106) est en outre réalisé pour modifier en configuration ouverte la deuxième information (130) affichée sur la surface d'information (110) en réponse à des entrées supplémentaires au niveau de l'unité d'entrée (104), les entrées supplémentaires étant différentes des entrées (120, 121) de la direction de mouvement (122).

9. Véhicule automobile, en particulier véhicule utilitaire, dont le poste de conducteur comprend un dispositif (100) selon l'une quelconque des revendications 1 à 8.
